# EUROPÄISCHE PATENTANMELDUNG

(11) **EP 0 894 669 A2**
(43) Veröffentlichungstag der Anmeldung: **03.02.1999**
(21) Anmeldenummer: 98113285.5
(22) Anmeldetag: 16.07.1998
(51) Int. Cl.: B60R 1/06

(54) **Aussenrückblickspiegel mit Seilzugverstellung**

(30) Priorität: 29.07.1997 DE 19732456
(71) Anmelder: Mittelhäuser, Bernhard, D-30900 Wedemark (DE)
(72) Erfinder: Schubert, Jan, 30900 Wedemark (DE)
(74) Vertreter: Depmeyer, Lothar

(57) **Zusammenfassung**

Die Erfindung betrifft einen Aussenrückblickspiegel mit Seilzugverstellung, wobei zwei Seilzüge vorgesehen sind, die wahlweise gegensinnig oder beide in einer Richtung verstellbar sind, um so den Spiegelkörper einmal um eine Querachse und zum anderen um eine Querachse ( Hochachse ) verstellen zu können, die praktisch im rechten Winkel zur erstgenannten Querachse verläuft. Dabei ist ein durch einen Bedienungshebel bedienbares Kugelgelenk vorgesehen, dessen Kugel über einen Arm mit einer Traverse verbunden ist, die im Abstand voneinander angeordnete Befestigungsstellen für die beiden Seilzüge aufweist. Um eine solche Konstruktion auch bei vergleichsweise flachen Gehäusefüssen anwenden zu können, erstreckt sich erfindungsgemäss der mit der Kugel des Kugelgelenks verbundene Arm im Winkel zum Bedienungshebel in der Weise, dass sich die Traverse im wesentlichen in Richtung des Bedienungshebels gesehen neben der Kugel des Kugelgelenks befindet.

## Beschreibung

Die Erfindung betrifft einen Aussenrückblickspiegel mit Seilzugverstellung, wobei zwei Seilzüge vorgesehen sind, die wahlweise gegensinnig oder beide in einer Richtung verstellbar sind, um so den Spiegelkörper einmal um eine Querachse und zum anderen um eine Querachse ( Hochachse ) verstellen zu können, die praktisch im rechten Winkel zur erstgenannten Querachse verläuft.

Die Erfindung betrifft weiterhin solche Spiegel der obigen Art, bei denen ein durch einen Bedienungshebel zu betätigendes Kugelgelenk vorgesehen ist, dessen Kugel über einen Arm mit einer Traverse verbunden ist, die im Abstand voneinander angeordnete Befestigungstellen für die beiden Seilzüge aufweist.

Bei den bekannten Spiegeln dieser Art ( DE 195 26 991 A1 ) greift der Bedienungshebel auf der dem Fahrzeuginneren zugekehrten Seite des Kugelgelenks an dessen Kugel an, während der Arm mit der Traverse auf der gegenüberliegenden Seite mit dem Kugelgelenk in Wirkverbindung steht. Eine solche Bauweise hat den Nachteil, dass das Kugelgelenk zusammen mit den vorerwähnten Elementen eine grössere Konstruktionstiefe benötigt, die jedoch nicht in allen Fällen z.B. dann nicht zur Verfügung steht, wenn der zur Unterbringung des Kugelgelenks dienenden Fuss des Spiegelgehäuses vergleichsweise flach ausgebildet werden muss.

Diese Nachteile sollen aufgrund der Erfindung vermieden werden, um so die eingangs erwähnten Spiegel auch bei solchen Gehäusefüssen anwenden zu können, die flach ausgeführt sind.

Zur Lösung dieser Aufgabe erstreckt sich erfindungsgemäss der mit der Kugel des Kugelgelenks verbundene Arm im Winkel - vorzugsweise etwa im rechten Winkel zum Bedienungshebel - in der Weise, dass sich die Traverse im wesentlichen in Richtung des Bedienungshebels bzw. vom Inneren des Fahrzeuges aus gesehen neben der Kugel des Kugelgelenks befindet. Demgemäss liegt der Arm nicht gewissermassen in Verlängerung des Bedienungshebels, sondern er erstreckt sich praktisch im rechten Winkel dazu und benötigt demgemäss nur eine geringe Einbautiefe. Der Fuss des Spiegelgehäuses kann daher flach und eng an der Fahrzeughaut anliegend ausgeführt werden. Besonders zweckmässig ist es dabei, wenn sich der Arm im wesentlichen senkrecht nach unten erstreckt, wobei er dann mit seinem oberen Ende an der Kugel des Kugelgelenks angreift.

Weitere Einzelheiten der Erfindung werden anhand der Zeichnung erläutert, in der ein Ausführungsbeispiel der Erfindung dargestellt ist. Es zeigen :

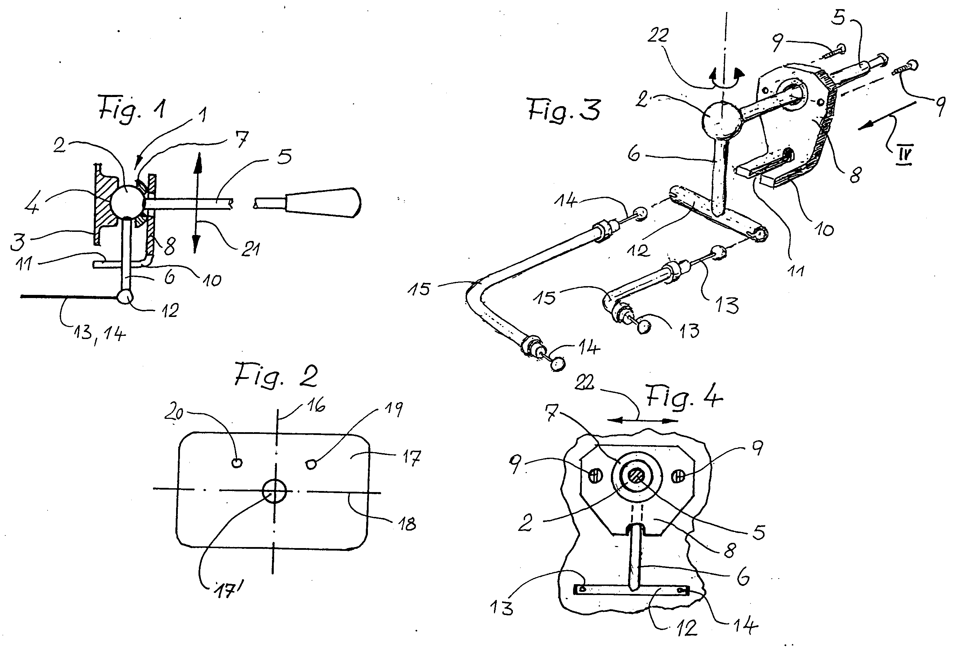

Fig. 1 einen senkrechten Teilschnitt durch den am Fahrzeug befestigten Fuss des Gehäuses eines Aussenrückblickspiegels für Fahrzeuge, und zwar einen Schnitt durch das von einem Bedienungshebel zu betätigenden Kugelgelenk,
Fig. 2 die dem Spiegel zugeordnete Spiegelscheibe in der Rückansicht,
Fig. 3 eine Explosionsdarstellung des Kugelgelenkbereiches von der dem Bedienungshebel abgekehrten Seite des Kugelgelenks aus gesehen in Schrägansicht und
Fig. 4 eine Teilansicht in Richtung des Pfeiles IV von Fig. 3 gesehen.

Der dem Fahrzeug abgekehrte Teil des Kugelgelenks 1 mit Kugel 2 wird von einer Wandung 3 des Spiegelgehäusefusses gebildet; die dort befindliche Halterung für die Kugel 2 ist mit 4 bezeichnet. Mit der Kugel 2 ist einmal ein zum Fahrzeuginneren gerichteter, imwesentlichen waagerechter Bedienungshebel 5 und etwa im rechten Winkel dazu ein sich nach unten erstreckender, im wesentlichen senkrechter Arm 6 verbunden. Eine äussere, auf die Kugel 2 einwirkende Scheibe 7 zusammen mit einem auf dieser Scheibe 7 aufliegenden, senkrechten Schenkel eines Winkelstückes 8 ist durch zwei Schrauben 9 gehalten, die das Kugelgelenk 1 zusammenhalten und mit der Wandung 3 verbunden sind.

Der im wesentlichen waagerechte Abschnitt 10 des Winkelstücks 8 ist gabelförmig mit Schlitz 11 ausgeführt, das sich etwa waagerecht nach aussen zum Inneren des Spiegelgehäuses hin erstreckt. In diesem Schlitz 11 ist der Arm 6 unterhalb des Kugelgelenks 1 geführt.

Am freien, unteren Ende des Arms 6 befindet sich eine etwa waagerechte Traverse 12, die etwa im rechten Winkel zum Arm 6 bzw. dem Bedienungshebel 5 erstreckt. An den Enden dieser Traverse 12 greifen zwei aus Stahl bestehende Seile 13, 14 an, die nach Art von Bowden-Zügen spielfrei in unverschiebbar gelagerten, biegsamen Hüllen 15 gehaltert sind und sowohl zugfest als auch in Längsrichtung druckfest sind. Die beiden Seile 13, 14 greifen gelenkig zu beiden Seiten einer senkrechten Querachse 16 ( Hochachse )der Spiegelscheibe 17 - innerhalb des Spiegelgehäuses befindlich - auf der Rückseite der Spiegelscheibe 17 an, und zwar beide im gleichen Abstand von einer etwa waagerechten Querachse 18 und der Querachse 16. Die beiden Einwirkungsstellen für die Seile 13, 14 auf der Rückseite der Spieglscheibe 17 sind mit 20, 19, das zur verstellbaren Lagerung der Spiegelscheibe 17 zentrisch engeordnete Kugelgelenk mit 17' bezeichnet.

Zur Handhabung und Wirkungsweise sei ausgeführt, dass eine Verschwenkung des Bedienungshebels 5 im Sinne des Doppelpfeiles 21 bzw. nach oben oder unten eine Verschiebung des Armes 6 im Schlitz 11 zur Folge hat. Demgemäss führt auch die Traverse 12 eine entsprechende Bewegung nach vorne bzw. hinten aus. Damit werden beide Seile 13, 14 synchron und gleichsinnig bewegt, wodurch eine Verschwenkung der Spiegelscheibe 17 um die Querachse 18 erreicht wird.

Wird hingegen der Bedienungshebel 5 waagerecht im Sinne des Doppelpfeiles 22 verschwenkt, so folgt eine entsprechende Bewegung des Armes 6 und eine Verschwenkung der Traverse 12; dadurch werden die Seile 13, 14 gegensinnig bewegt. Es wird so eine Verschwenkung der Spiegelscheibe 17 um die senkrechte Querachse 16 erreicht.

Es ist somit möglich, durch ein Verschwenken des Bedienungshebels 5 zur Seite hin oder nach oben bzw. unten die gewünschte Spiegelverstellung mit nur zwei Seilen 13, 14 vorzunehmen, ohne dazu auf die Spiegelscheibe 17 Rückholfedern od. dgl. einwirken zu lassen.

Es sei erwähnt, dass ggfs. die Scheibe 7 in Fortfall kommen kann; in diesem Falle müsste der senkrechte Schenkel des Winkelstückes 8 entsprechend ausgebildet an der Kugel 8 anliegen. Erkennbar ist auch, dass die Verstellung des Spiegelkörpers 17 unter Verzicht auf eine Rückholfeder ausschliesslich mit den beiden Seilen 13, 14 erfolgt.

## Patentansprüche

1. Durch zwei Seilzüge verstellbarer Aussenrückblickspiegel für Kraftfahrzeuge, wobei die Seilzüge wahlweise gegensinnig oder gleichsinnig verstellbar sind und die Spiegelscheibe einmal um eine Querachse und zum anderen um eine Querachse (Hochachse) verstellbar ist, die praktisch senkrecht zur ersten Querachse verläuft, wobei ein durch einen Bedienungshebel betätigbares Kugelgelenk vorgesehen ist, deren Kugel mit dem Bedienungshebel und über einen Arm mit einer Traverse verbunden ist, an der die Seilzüge im Abstand voneinander angreifen, dadurch gekennzeichnet, dass sich der Arm (6) im Winkel zum Bedienungshebel (5) erstreckt in der Weise, dass sich die Traverse (12) vom Inneren des Fahrzeuges aus bzw. in Richtung des Bedienungshebels (5) gesehen neben der Kugel (2) des Kugelgelenks (1) befindet.

2. Spiegel nach Anspruch 1, dadurch gekennzeichnet, dass sich der Arm (6) vom Kugelgelenk (1) aus nach unten erstreckt.

3. Spiegel nach Anspruch 2, dadurch gekennzeichnet, dass sich der Arm (6) im wesentlichen senkrecht nach unten erstreckt.

4. Spiegel nach Anspruch 1 und 2, dadurch gekennzeichnet, dass die Traverse (12) am unteren Ende des Armes (6) angeordnet ist und mit ihm einen Winkel von etwa 90° bildet.

5. Spiegel nach Anspruch 1, dadurch gekennzeichnet, dass für den Arm (6) eine Führung ( Schlitz 11 ) vorgesehen ist, die sich in etwa in Richtung des Bedienungshebels (5) erstreckt in der Weise, dass der Arm (6) bei einer Bewegung des Bedienungshebels (5) nach oben oder unten in der Führung hin- und herbewegbar ist, um eine Querbewegung der Traverse (12) und ein gleichsinniges Bewegen der beiden Seile (13,14) zu erreichen.

6. Spiegel nach Anspruch 5, dadurch gekennzeichnet, dass durch eine Bewegung des Bedienungshebels (5) zur Seite hin der Arm (6) in der Führung (11) um seine Längsachse verdrehbar und die Traverse (12) verschwenkbar ist, um so eine gegenläufige Bewegung der Seile (13,14) zu erzielen.
